# EUROPÄISCHE PATENTANMELDUNG

(11) **EP 0 700 666 A2**
(43) Veröffentlichungstag der Anmeldung: **13.03.1996**
(21) Anmeldenummer: 95202446.1
(22) Anmeldetag: 08.09.1995
(51) Int. Cl.: A61C 13/12, A61C 13/00

(54) **Werkzeug zum Formen von zahntechnischen Wachsprofilen**

(30) Priorität: 08.09.1994 DE 4431936
(71) Anmelder: Robakowski, Werner, D-63303 Dreieich (DE)
(72) Erfinder: Robakowski, Werner, D-63303 Dreieich (DE)
(74) Vertreter: Eyer, Eckhardt Philipp, Dipl.-Ing.

(57) **Zusammenfassung**

Werkzeug zum Formen von zahntechnischen Wachsprofilen für die Gußtechnik zur Herstellung von Zwischengliedern für Verblend- oder Vollgußbrücken, bestehend aus einem Paar Modeln (1, 2), die in sich spiegelbildlich entsprechender Lage eine beliebige Zahl von sich zu Kernprofilen einer den verschiedenen Zahntypen entsprechenden Kontur ergänzenden Formen (3, 3a; 4, 4a) enthalten und mit Verbindungselementen zur Befestigung jeweils an einem der entsprechende Halteelemente aufweisenden Lastarme versehen sind. Die Lastarme (17, 18) sind mittels jeweils einer Schwenkachse (19, 20) an den Kraftarmen (21, 22) angelenkt und an ihrem gegen die Kraftarme (23, 24) weisenden Enden mittels jeweils einer Schlitzführung (25, 26) an dem jeweils anderen Kraftarm geführt sind, wobei die Schwenkachsen (19, 20) der Lastarme sowie die Führungsstifte (25) der Schlitzführung ein regelmäßiges Viereck bilden, dessen geometrischer Mittelpunkt von der Mittelachse (27) der Zange gebildet ist. Jedenfalls eines der der Halterung der Modeln (1, 2) dienenden Trägerelemente (28) ist schwenkbar an seinem Lastarm (18) befestigt.

## Beschreibung

Die Erfindung geht aus von einem Werkzeug gemäß dem Oberbegriff des Patentanspruches 1.

Die zahntechnische Erstellung von Brückenkörpern oder Vollgußbrücken aus Metallkeramik erfolgt in der Weise, daß zunächst ein Positivmodell des tragenden Kernprofils des in die Kieferlücke einzufügenden Zahnes hergestellt, von diesem Modell die erforderliche Gußform abgeleitet und daraus der metallkeramische Kern gegossen wird, auf den dann die die Biß- bzw. Sichtflächen bildenden Dentin- bzw. Schmelzschichten aufgebracht werden. Die Herstellung der Kernprofile für derartige Brücken erfolgt bisher ebenso wie das Auftragen der Schichten von Hand in Einzel-Modellier-Arbeit mit Hilfe von Modellierspateln und ist daher außerordentlich zeit-, arbeits- und damit kostenaufwendig.

Ziel der vorliegenden Erfindung ist die Schaffung eines Werkzeuges, mit dessen Hilfe die Erstellung von Brückenkörpern und Vollgußbrücken der genannten Art vereinfacht werden kann.

Diese Aufgabe wird mit Werkzeug mit den im Patentanspruch 1 wiedergegebenen Merkmalen gelöst.

Durch die Erfindung ist ein Handwerkzeug geschaffen, mit dessen Hilfe Kernprofile in einer auf den jeweiligen Zahntyp abgestimmten Form durch einfachen Preßvorgang - in der üblichen Weise aus Wachs oder einem leicht ausbrennbaren Kunststoff - vormodelliert werden können. Die aufwendige Einzelmodellierarbeit entfällt, es ist lediglich erforderlich, durch partielles Abtragen oder Auftragen von Material dem Vorformling die angestrebte Kontur des Kernprofils zu geben, das dann in der bekannten und beschriebenen Weise als Modell zur Herstellung der Fußform dient.

Weitere Einzelheiten der in den Patentansprüchen gekennzeichneten Erfindung werden nachstehend anhand der beigefügten Zeichnung erläutert. Es zeigen
- Fig. 1: eine teilgeschnittene Seitenansicht auf ein Werkzeug zum Formen von zahntechnischen Wachs- oder Kunststoffprofilen
- Fig. 2: eine Ansicht des linksseitgen Models des Werkzeuges
- Fig. 3: eine Ansicht des rechtsseitigen Models des Werkzeuges
- Fig. 4: die Sicht auf eine andere Ausführungsform eines Werkzeuges gemäß Erfindung
- Fig. 5: eine Sicht von links auf das in Fig. 4 wiedergegebene Werkzeug mit ausgeschwenktem Modelträger
- Fig. 6: die teilgeschnittene Sicht auf eine andere Ausführungsform eines Werkzeuges gemäß Erfindung
- Fig. 7: Sicht von rechts auf Fig. 4
- Fig. 8: eine Sicht von oben auf Fiu. 4
- Fig. 9: einen Schnitt nach A - B durch 5

Das in der Zeichnung wiedergegebene Werkzeug dient zum Formen von zahntechnischen Wachs- oder Kunststoffprofilen als Gußmodelle zur Herstellung von Zwischengliedern für Verblend- oder Vollgußbrücken. Es besteht aus einem Paar von Modeln 1, 2, die in sich spiegelbildlich entsprechender Lage eine beliebige Zahl von Formen 3, 3a; 4, 4a enthalten, die sich zu Kernprofilen einer den verschiedenen Zahntypen entsprechenden Kontur ergänzen. Die Modeln 1, 2 sind mittels einander entsprechender Verbindungselemente 5, 6; 48, 49 an jeweils einem Arm 7, 8; 43, 44 eines aus gelenkig miteinander verbundenen Hebelarmen bestehenden Zweiarmhebels anbringbar sind.

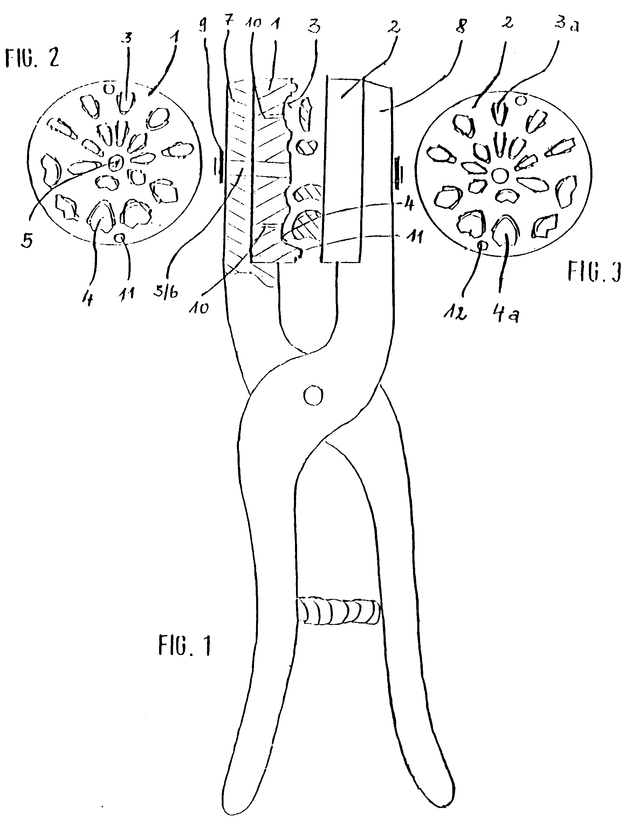

Im Falle der in den Fig. 1 bis 3 wiedergegebenen Ausführungsform besteht der Zweiarmhebel aus einer - von zwei verbundenen doppelarmigen Hebeln gebildeten - Zange, deren Lastarme 17, 18 mit Aufnahmen zur Anbringung der Modeln versehen sind. Zu diesem Zweck weiwssen die Modeln als Verbindungselement jeweils einen an ihrem Ende mit einer Ringnut versehenen Steckstift 5 auf, der in eine als Halterung dienende Bohrung der des zugehörigen Lastarmes 7 bzw. 8 eingesteckt und mittels eines Splintringes 9 gesichert werden kann. In der Praxis wird die weitaus überwiegende Zahl der erforderlichen Kernprofile unter Berücksichtigung des Vorformcharakters aus einem Model-Paar herstellbar sein, die dargestellte Art der Befestigung ermöglicht jedoch auch einen Austausch der Modeln gegen andere, Modeln für Kernprofile anderer Form und/oder Größe enthaltende Modeln.

Die in den Modeln ausgebildeten Formen sind jeweils mit einer bis auf die Modelrückfläche reichenden Durchbohrung 10 versehen, über die mit Hilfe eines entsprechend dimensionierten Ausstoßstiftes das Entformen der in dem Werkzeug hergestellten Vorform unterstützt werden kann. In der Zeichnung ist eine solche Durchbohrung lediglich in Verbindung mit den mit Bezugsziffern versehenen Halbformen 3, 4 eingezeichnet. Es sind jedoch in der Praxis alle Formhälften mit einer derartigen Ausstoßbohrung versehen im Hinblick darauf, das die Seite, in der der Vorformling bei der Herstellung hängenbleibt, nicht mit Sicherheit vorausgesagt werden kann.

Es sind schließlich die Modeln mit einander entsprechenden Justierprofilen 11, 12 versehen, mit denen das konturgenaue Schließen der Modeln in der Zange und damit eine hohe Formtreue der Vorform sichergestellt werden.

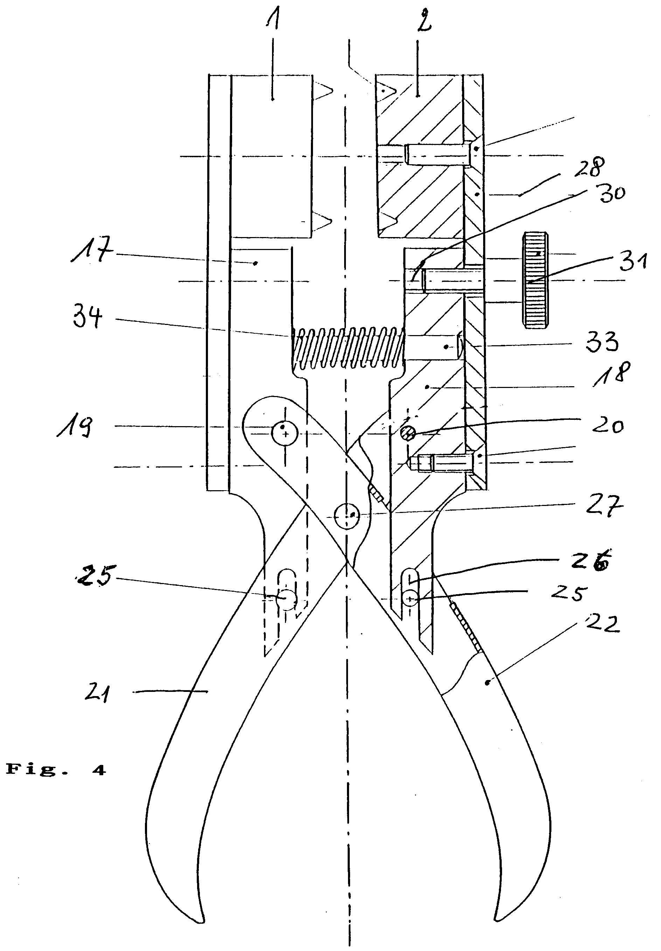

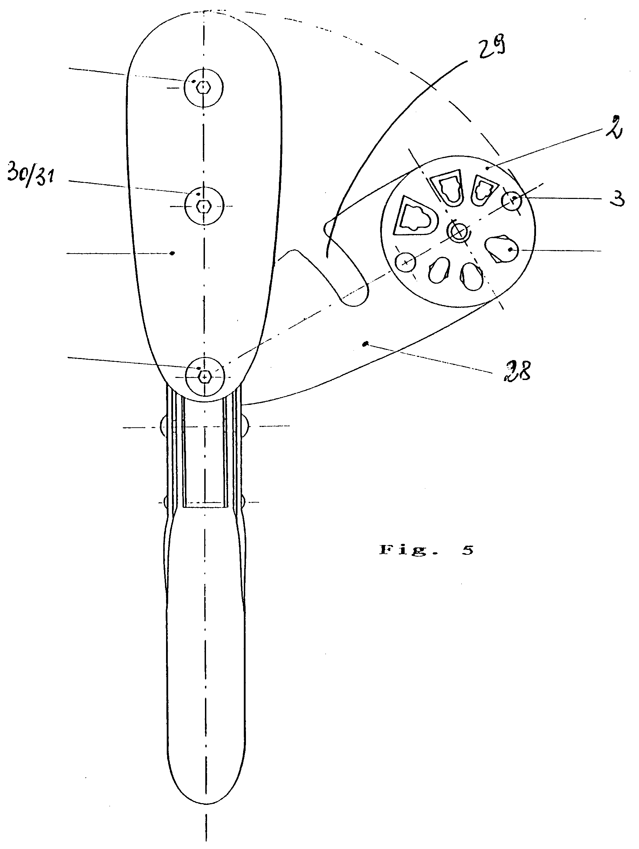

Bei der in den Fig. 4 und 5 wiedergegebenen Ausführungsform eines WErkzeuges, in denen im übrigen die übereinstimmenden Teile mit denselben Bezugsziffern wie in den Fig. 1 bis 3 bezeichnet sind, sind zur Sicherstellung einer absolut achsparallelen Verpressung der Modeln ungeachtet der bei Zangen üblichen kreisbogenförmigen Schließbewegung die Lastarme 17, 18 jeweils mittels einer Schwenkachse 19, 20 an den Kraftarmen 21, 22 der Zange angelenkt und an ihrem gegen die Kraftarme 21, 22 weisenden Enden mittels jeweils einer Schlitzführung 25, 26 an dem jeweils anderen Kraftarm 22, 21 geführt, wobei die Schwenkachsen 19, 20 der Lastarme sowie die Führungsstifte 25 der Schlitzführung ein regelmäßiges Viereck bilden, dessen geometrischer Mittelpunkt von der Mittelachse 27 der Zange gebildet ist.

Es ist weiterhin das der Halterung des Modeln 2 dienende Trägerelement 28 schwenkbar an seinem Lastarm 18 befestigt, wodurch sowohl das Entformen der hergestellten Vorformen als auch der Austausch der Modeln ohne Behinderung durch die Arme der Zange vorgenommen werden kann. Hierbei ist zur Justierung und Sicherung der Stellung des Models in der Gebrauchslage Trägerelement 28 mit einer Arretierung versehen, zu welchem Zweck das Trägerelement 28 mit einem Seitenschlitz 29 und der Lastarm 18 an der entsprechenden Stelle mit einer Gewindebohrung 30 versehen sind, die der Aufnahme einer der Arretierung dienenden Rändelschraube 31 dient. Die Befestigung der Modeln 1, 2 an ihren Trägerelementen 28 erfolgt in diesem Falle mittels Schrauben 32. Die auf dem Führungsstift 33 gehaltene Druckfeder 34 wirkt in Öffnungsrichtung und hält damit die Zange offen, wodurch das Füllen der Formen erleichtert wird. Die Zentriernasen 35 verbessern neben den sonstigen Führungen die Paßgenauigkeit der Modeln bei dem gegen die Kraft der Feder 34 erfolgenden Schließen der Form.

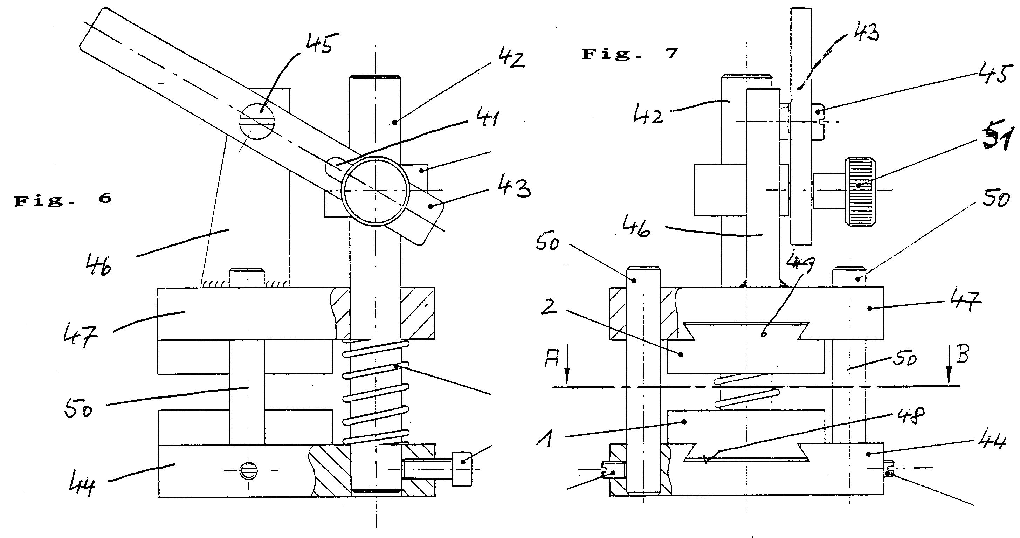

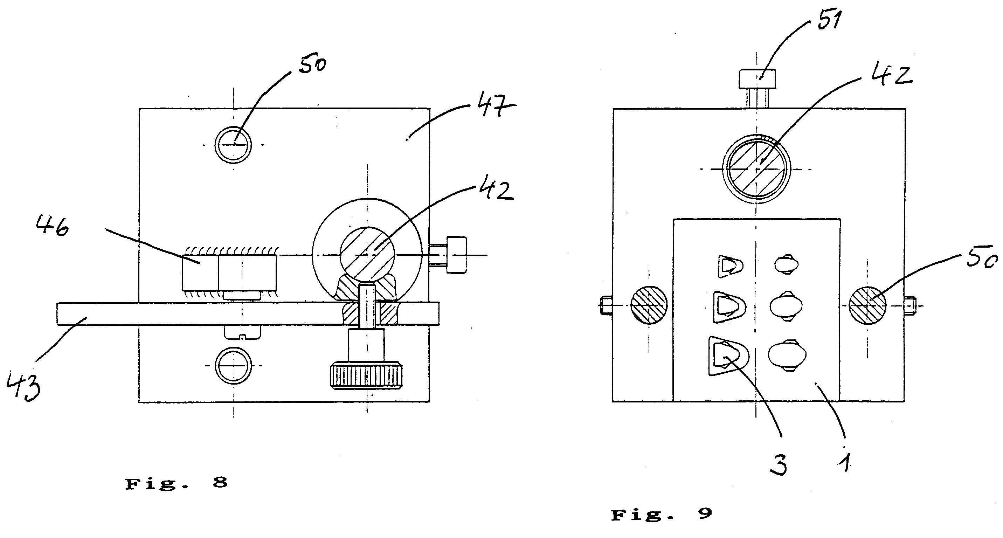

Eine weitere Ausführungsform der Erfindung ist in den Fig. 6 bis 9 wiedergegeben. In diesem Falle ist der Zweiarmhebel von einem in einer Langlochführung 41 an einem Ständer 42 geführten einarmigen Hebel 43 gebildet, der zusammen mit der Fußplatte 44 des Ständers 42 die Zange bildet und über eine mittels des Achsbolzens 45 angelenkte Druckstange 46 mit einer am Ständer geführten, der Aufnahme einer der Modeln dienenden Druckplatte 47 verbunden ist. Im Beispielsfalle ist die Druckplatte 47 an zwei parallelen von dem Ständer 42 unabhängigen Führungen 50 geführt, es kann jedoch auch der Ständer selbst als Führung für die Druckplatte verwendet werden. Zur Befestigung der Modeln sind die in diesem Falle den einen der Zangenhebel bzw. die Gegendruckplatte bildende Fußplatte 44 sowie die Druckplatte 47 jeweils mit einer schwalbenschwanzförmig hinterschnittenen Nut 48 und die Modeln 2, 3 mit entsprechend schwalbenschwanzförmig hinterschnittenen Führungsschienen Nut 49 versehen sind, wodurch ebenfalls das Entformen der hergestellten Vorformen als auch der Austausch der Modeln außerordentlich vereinfacht ist. Es bedarf hierzu lediglich des seitlichen Herausschiebens der Modeln aus dem Werkzeug, wodurch einerseits die Vorformen frei zugänglich werden und andererseits das Werkzeug unmittelbar zur anderweitigen Besetzung mit einem neuen Paar Modeln frei wird. Die Rändelmutter 51 dient der Sicherung des Hebels 41 auf seiner Führung 41, während mittels der auf dem Ständer 42 geführten Druckfeder 52 die Form in der Ruhestellung in entsprechender Weise wie die Druckfeder 34 der Ausführungsform gemäß Fig. 4, 5 offen hält.

## Patentansprüche

1. Werkzeug zum Formen von zahntechnischen Wachsprofilen für die Gußtechnik zur Herstellung von zwischengliedern für Verblend- oder Vollgußbrücken, gekennzeichnet durch ein Paar Modeln (1, 2), die in sich spiegelbildlich entsprechender Lage eine beliebige Zahl von sich zu Kernprofilen einer den verschiedenen Zahntypen entsprechenden Kontur ergänzenden Modeln (3, 3a; 4, 4a) enthalten und mittels einander entsprechender Verbindungselemente (5, 6) an jeweils einem Arm (7, 8) eines aus gelenkig miteinander verbundenen Hebelarmen bestehenden Zweiarmhebels anbringbar sind.

2. Werkzeug nach Anspruch 1, dadurch gekennzeichnet, daß der Zweiarmhebel von einer Zange gebildet ist, deren Lastarme mit Aufnahmen zur Anbringung der Modeln versehen sind.

3. Werkzeug nach Anspruch 2, dadurch gekennzeichnet, daß die in den Modeln ausgebildeten Negativformen (3, 4) jeweils mit einer bis auf die Modelrückfläche reichenden Durchbohrung (10) versehen sind.

4. Werkzeug nach Anspruch 2 oder 3, dadurch gekennzeichnet, daß die Modeln (1, 2) mit einander entsprechenden Justierprofilen (11, 12) versehen sind.

5. Werkzeug nach einem der Ansprüche 2 - 4, dadurch gekennzeichnet, daß die Lastarme (17, 18) mittels jeweils einer Schwenkachse (19, 20) an den Kraftarmen (21, 22) angelenkt und an ihrem gegen die Kraftarme (23, 24) weisenden Enden mittels jeweils einer Schlitzführung (25, 26) an dem jeweils anderen Kraftarm geführt sind, wobei die Schwenkachsen (19, 20) der Lastarme sowie die Führungsstifte (25) der Schlitzführung ein regelmäßiges Viereck bilden, dessen geometrischer Mittelpunkt von der Mittelachse (27) der Zange gebildet ist.

6. Werkzeug nach einem der Ansprüche 2 - 5, dadurch gekennzeichnet, daß jedenfalls eines der der Halterung der Modeln (1, 2) dienenden Trägerelemente (28) schwenkbar an seinem Lastarm (18) befestigt ist.

7. Werkzeug nach Anspruch 6, dadurch gekennzeichnet, daß das Trägerelement (28) mit einer Arretierung zur Justierung des Models in der Gebrauchslage versehen ist.

8. Werkzeug nach Anspruch 7, dadurch gekennzeichnet, daß das Trägerelement (28) mit einem Seitenschlitz (29) und der Lastarm (18) an der entsprechenden Stelle mit einer Gewindebohrung (30) versehen sind, die der Aufnahme einer der Arreitierung dienenden Rändelschraube (31) dient.

9. Werkzeug nach Anspruch 1, dadurch gekennzeichnet, daß der Zweiarmhebel von einem in einer Langlochführung (41) an einem Ständer (42) geführten einarmigen Hebel (43) gebildet ist, der zusammen mit der Fußplatte (44) des Ständers (42) den Zweiarmhebel bildet und der über mittels eines Gelenkes (45) verbundene Druckstange (46) mit einer am Ständer (42) geführten, der Aufnahme einer der Modeln dienenden Druckplatte (47) verbunden ist.

10. Werkzeug nach Anspruch 9, dadurch gekennzeichnet, daß die Fußplatte (44) und die Druckplatte (47) jeweils mit einer schwalbenschwanzförmig hinterschnittenen Nut (48) und die Modeln (2, 3) mit entsprechend schwalbenschwanzförmig hinterschnittenen Führungsschienen Nut (49) versehen sind.

11. Werkzeug nach Anspruch 9 oder 10, dadurch gekennzeichnet, daß die Druckplatte (47) und zwei parallelen von dem Ständer (42) unabhängigen Führungen (50) geführt ist.
